# EUROPÄISCHE PATENTSCHRIFT

(11) **EP 0 353 409 B1**
(45) Veröffentlichungstag und Bekanntmachung des Hinweises auf die Patenterteilung: **06.07.1994**
(21) Anmeldenummer: 89109111.8
(22) Anmeldetag: 20.05.1989
(51) Int. Cl.: H04N 5/20, B25J 9/18

(54) **Automatische Helligkeits- und Kontrast-Steuerung einer Video-Kamera für industrielle/militärische Zwecke**
Automatic brightness and contrast adjustment of a video camera for industrial or military purposes
Réglage automatique de la luminance et du contraste d'une caméra vidéo pour des applications industrielles ou militaires

(30) Priorität: 28.07.1988 CH 2858/88
(43) Veröffentlichungstag der Anmeldung: 07.02.1990
(73) Patentinhaber: Oerlikon-Contraves AG, 8052 Zürich (CH)
(72) Erfinder: Vuichard, Albin, CH-8753 Mollis (CH); Gebauer, Werner, CH-8156 Oberhasli (CH); Buehler, Bruno, CH-8174 Stadel (CH)

(56) Entgegenhaltungen:
- EP-A- 0 034 737
- US-A- 4 204 229
- US-A- 4 613 269
- ROBOTICS, Band 3, Nr. 2, Juni 1987, Seiten 157-165, Elsevier Science Publishers B.V., Amsterdam, NL; I. PLANDER: "Trends in the development of sensor systems and their use in some technological areas"
- IEEE TRANSACTIONS ON INDUSTRIAL ELECTRONICS, Band 35, Nr. 1, Februar 1988, Seiten 40-51, IEEE, New York, NY, US; M. KABUKA et al.: "Robot vision tracking system"

## Beschreibung

Die Erfindung liegt auf den Gebieten der Optik, der Elektronik und der Bildverarbeitungstechnik. Sie betrifft ein Verfahren gemäss dem Oberbegriff des Patentanspruchs 1 und eine Vorrichtung zur Durchführung des Verfahrens. Insbesondere wird die Video-Kamera zur Versorgung eines Industrie-Roboters verwendet, oder es dient das Bild einer FLIR-Kamera zur Versorgung der Bild-Steuereinheit (Video-Tracker) einer automatischen Zielverfolgungsvorrichtung. Als FLIR-Kamera (FLIR = forward looking infrared) wird eine auf Wärmestrahlung empfindliche Infrarot-Kamera bezeichnet.

Ein solches Verfahren ist beispielsweise aus der US-A-4,613,269 bekannt, in der die Hantierung von Objekten durch einen Roboter mittels einer Video-Kamera beschrieben wird. Die Video-Kamera ist getrennt vom Roboter ortsfest positioniert. Aufgrund der Bilderkennung wird der Roboter zur Erfassung eines Objektes aus einem viele Objekte enthaltenden stationären Behälter gesteuert. Die dabei verwendete Technik zur automatischen Steuerung von Helligkeit und Kontrast ist somit auf stationäre Objekte ausgerichtet.

Ferner ist bekannt bei Video-Kameras, die zur Zielverfolgung eingesetzt werden, die Gain/Offset-Steuerung nach optimaler visuellen Erkennbarkeit vorzunehmen, d.h. die Kamera - beispielsweise eine FLIR-Kamera - ist derart gesteuert, dass lediglich im vorgegebenen Bildbereich keine Sättigung auftritt. Damit ist zwar eine günstige zusätzliche visuelle Zielüberwachung gewährleistet, hingegen ist das Bild für die automatische Zielverfolgung mit der Zielverfolgungs-Plattform keineswegs optimal.

Es ist Aufgabe der Erfindung, ein Verfahren und eine entsprechende Vorrichtung zu schaffen, welche durch Wahl der Betriebsparameter einer Video-Kamera, beispielsweise im Zusammenhang mit der Steuerung eines Industrie-Roboters oder der Verfolgung eines Zieles mittels einer Zielverfolgungs-Plattform, ein optimales Bild bei einem beweglichen Objekt zur Verfügung stellt. Die Aufgabe wird gelöst durch die in den Patentansprüchen 1 und 3 enthaltenen Lehren.

Der Aufbau der Vorrichtung wird anhand der folgenden Abbildungen beschrieben:
- Fig. 1: zeigt das Blockschema einer das erfinderische Verfahren ermöglichende Vorrichtung am Beispiel eines Industrie-Roboters, bestehend aus einer Video-Kamera, einer Bild-Auswerte-Einheit und einer steuerbaren Manipulier-Vorrichtung,
- Fig. 2: stellt den Aufbau der Bild-Steuereinheit dar,
- Fig. 3: ist ein Histogramm der Helligkeit der Kamera-Bildpunkte mit Darstellung der Helligkeitsverteilungen des Objektes und des Hintergrundes.
- Fig. 4: zeigt anhand eines Blockschemas ein weiteres Beispiel der Erfindung, nämlich den prinzipiellen Aufbau einer Zielverfolgungs-Vorrichtung mit Plattform, FLIR-Kamera und Bild-Steuereinheit.

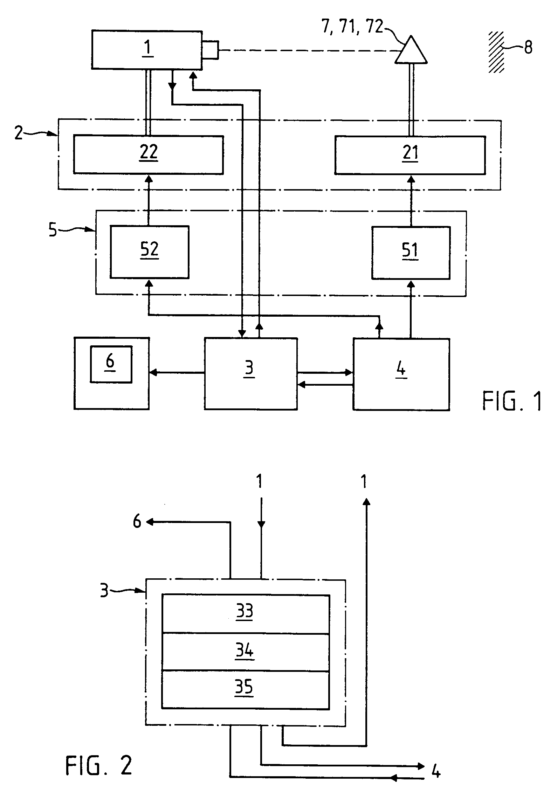

Fig. 1 zeigt den prinzipiellen Aufbau einer Vorrichtung zur Anwendung des erfinderischen Verfahrens anhand eines Blockschemas. Es handelt sich um die optische Ueberwachung einer automatisch steuerbaren Manipulier-Vorrichtung 2, beispielsweise eines Industrie-Roboters 21 oder einer vollautomatisch steuerbaren Werkzeugmaschine. Ueberwacht wird das Ergreifen und die Handhabung des Objektes 7, beispielsweise eines Werkstückes 71 oder eines Werkzeuges 72, mittels einer Video-Kamera 1. Die Manipulier-Vorrichtung 2 kann auch eine Zielverfolgungs-Plattform 22 sein, wobei letztere die optische Verfolgung eines Objektes in Form eines Zieles 73 gewährleistet.

Die Vorrichtung besteht damit aus der erwähnten Video-Kamera 1, welche das Bild des Objektes 7 empfängt und die, der Bildinformation entsprechenden, elektrischen Analogsignale der Bild-Steuereinheit 3 überträgt. In dieser Bild-Steuereinheit wird die Bild-information ausgewertet, wobei Signale zum optimalen Betrieb der Video-Kamera 1 an letztere zurückgeführt werden. Die aufbereitete Bildinformation der Bild-Steuereinheit wird vom Hauptrechner 4 empfangen und dort in Steuersignale transformiert. Diese werden durch das Servo-System 51 in eine Bewegungsfolge des Industrie-Roboters 21, beispielsweise einer Werkzeugmaschine, umgesetzt. Der Hauptrechner steuert zusätzlich den gesamten Bewegungslauf der Vorrichtung, beispielsweise auch über ein zusätzliches Servo-System 52 eine Plattform 22, die mit der Video-Kamera 1 in mechanisch starrer Verbindung steht und es damit erlaubt, die Video-Kamera 1 dem Objekt 7 nachzuführen. Die Bild-Steuereinheit 3 und der Hauptrechner 4 können allenfalls zu einer Einheit zusammengefügt sein.

Der prinzipielle Aufbau der Bild-Steuereinheit 3 ist in Fig. 2 dargestellt. Dieselbe besteht aus der Bildauswerte-Einheit 33, der Gain/Offset-Steuerung 34 und dem I/O-Prozessor 35.

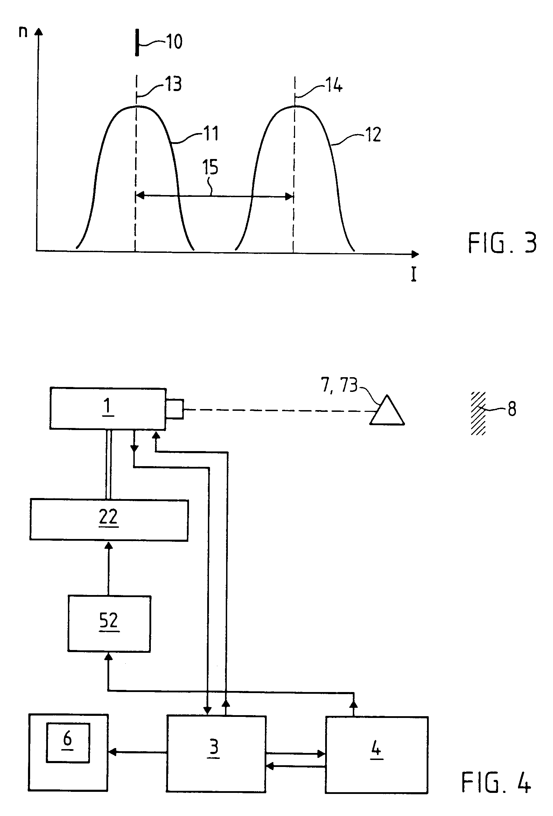

Das analoge Video-Signal der Video-Kamera 1 wird zunächst von einem A/D-Wandler digitalisiert, d.h. in Zahlensequenzen verwandelt, welche über die Intensität der einzelnen Bildpunkte Auskunft geben. Diese digitale Bildinformation wird anschliessend der Bildauswerte-Einheit 33 zugeführt. Dort wird die Interpretation des digitalisierten Video-Signales vorgenommen. Aufgrund einer sog. Grauwert-Histogramm-Analyse wird, wie das Histogramm der Fig. 3 darstellt, das Objekt 7 vom Hintergrund 8 unterschieden und danach sowohl eine gewichtete Helligkeit 13 des Objektes 7 als auch eine gewichtete Helligkeit 14 des Hintergrundes 8 bestimmt. Die gewichteten Helligkeitswerte 13,14 resultieren aus einer Ausmessung jedes einzelnen Bildpunktes des Objektes 7 resp. des Hintergrundes 8.

Die gewichteten Helligkeitswerte 13,14 werden durch die Gain/Offset-Steuereinheit 34 der Bild-Steuereinheit 3 in Signale umgesetzt und über den I/O-Prozessor 35 der Video-Kamera 1 zugeführt. Letzterer wird damit ermöglicht, in optimalem Arbeitsbereich zu arbeiten. Zu diesem Zweck wird der Offset-Parameter der Video-Kamera 1 derart bestimmt, dass, wie in Fig.3 abgebildet, der gewichtete Mittelwert 13 der Objekthelligkeit 11 einen festen, vorgegebenen Wert 10 annimmt. Weiter wird der Gain-Parameter der Video-Kamera 1 bezüglich des Kontrastes 15 zwischen der gewichteten Helligkeit 13 des Objektes 7 und des entsprechenden Wertes 14 des Hintergrundes 8 optimiert. Massgebend ist dabei die minimale Ueberlappung der Helligkeitsverteilungen 11,12 von Objekt und Hintergrund bei minimalem Kontrast 15 der gewichteten Helligkeitsmittelwerte.

Das beschriebene Verfahren, das mittels der Vorrichtung nach Fig.1 realisiert werden kann, lässt sich natürlich nur anwenden, wenn das Objekt 7, sei es nun ein Werkstück 71, ein Werkzeug 72 oder ein Ziel 73, gegenüber des Hintergrundes 8 anhand der erwähnten Grauwert-Histogramm-Analyse erkennbar ist. Es ist aber festzuhalten, dass bewegliche Objekte 7 sich oft vor einem stets wechselnden Hintergrund verschieben und somit die Erkennbarkeit des Objektes zeitweise gewährt werden kann. Dies ist beispielsweise bei einem Werkstück 71 in der Erfassungs-Phase der Fall, dürfte hingegen bei dessen automatischem Einbau in eine, den Hintergrund 8 darstellende, Maschine nicht gewährleistet sein; ebenso kann ein Ziel 73 gegenüber dem klaren Himmmel, vor Eintauchetn in die Horizontsilhouette, optisch gut erfassbar sein.

Es ist der Zweck der Vorrichtung und des entsprechenden Verfahrens, zu jenem Zeitpunkt der guten Erkennbarkeit die optischen Parameter der Kammera mittels der Gain/Offset-Kontrolle derart festzulegen, dass die Erkennbarkeit des Objekt 7 auch vor einem kompliziert strukturierten oder tarnenden Hintergrund 8 gewährleistet ist. Es kann damit also erreicht werden, dass ein einmal erkanntes Objekt auch unter widerlichen optischen Verhältnissen, d.h. wenn sich dessen Kontur kaum von derjenigen des Hintergrundes abhebt, gut sichtbar bleibt.

Trotzdem ist es denkbar, dass eine eindeutige automatische Objekterkennung zu keinem Zeitpunkt gewährleistet werden kann. Falls tatsächlich der Helligkeitkontrast zwischen Objekt 7 und Hintergrund 8 zu klein ist um eine Gain-Optimierung zu ermöglichen, wird der Gain derart gesteuert, dass die gewichteten Helligkeiten 13,14 von Ziel und Hintergrund einen möglichst grossen Kontrast 15 aufweisen, ohne dass eine der beiden Helligkeitsverteilungen 11,12 in Sättigung geht.

Die Gain/Offset-Steuer-Einheit 34 liefert eine digitale Information. Dieselbe wird, wie bereits erwähnt, durch den I/O-Prozessor 35 in die, der Video-Kamera zugängliche Form umgesetzt und letzterer zugeführt.

Prinzipiell ist es auch denkbar, dass die Bildauswertung nicht digital über eine digitale Bildauswerte-Einheit 33 mit digitaler Gain/Offset-Steuerung 34 und nachgeschaltetem I/O-Prozessor 35 erfolgt, sondern direkt in analoger Form vorgenommen wird. Diese Möglichkeit könnte dann von Vorteil sein, wenn die automatische Gain/Offset-Steuerung in die Video-Kamera integriert ist.

Die Bildauswerte-Einheit 33 vermittelt, nebst der gewichteten Helligkeiten 13,14, dem I/O-Prozessor 35 Angaben über die Position des Objektes innerhalb des Bildbereiches der Video-Kamera 1. Diese Information wird dem Rechner 4 zugeführt, welcher anhand dieser Positionsangaben das Servo-System 51 zur Nachführung der Objektposition mittels des Industrie-Roboters 21, veranlasst. Daneben kann es sich als notwendig erweisen, die Video-Kamera dem Objekt nachzuführen. Zu diesem Zweck werden Steuersignale des Rechners 4 einem anderen oder zusätzlichen Servo-System 52 zugeführt, der einen Plattform 22 ansteuert. Die Video-Kamera steht mit jener Plattform in mechanisch starrer Verbindung und erlaubt damit die Nachführung der Video-Kamera auf das Objekt 7.

Von der Bild-Steuereinheit wird ein Signal über den A/D-Wandler dem Monitor 6 zugeführt. Anhand desselben kann die Funktionsweise der Vorrichtung visuell überwacht werden. Es ist allerdings festzuhalten, dass der Monitor dem Operator allenfalls nicht ein möglichst gutes Bild anbieten kann, da die Bildoptimierung nicht den Auge des Monitor-Betrachters, sondern der automatisch steuerbaren Vorrichtung 2 optimal angepasst ist.

Die Abbildung von Fig. 4 zeigt die Anwendung des Verfahrens auf eine Zielverfolgungsvorrichtung. Dieselbe besteht aus der azimutal und in der Neigung beweglichen Plattform 22, welche mit der Video-Kamera 1, beispielsweise einer FLIR-Kamera, in mechanisch starrer Verbindung steht, dem Servo-System 52 zur Steuerung der Position der Plattform 22 und der besprochenen Bild-Steuereinheit 3 (sog. Video-Tracker). Die Bild-Steuereinheit 3 überwacht sowohl die Video-Kamera 1 als auch, unter Beizug des Hauptrechners 4, die Position der Plattform 22 aufgrund des Video-Signales, das in der Kamera 1 erzeugt wird. Der Monitor 6, der mit der Bild-Steuereinheit 3 in Verbindung steht, erlaubt dem Operator eine visuelle Verfolgung des Zieles.

## Patentansprüche

1. Verfahren zur automatischen Steuerung von Helligkeit und Kontrast eines Videobildes in einer mit einer Gain/Offset-Verstellvorrichtung versehenen, auf ein Objekt (7) gerichteten Videokamera (1), die zur Steuerung einer Manipuliervorrichtung (2) verwendet wird, wobei aus einer Grauwert-Histogrammanalyse des Videobildes die Helligkeitsverteilungen (11, 12) des Objekts (7) und des dieses umgebenden Hintergrundes (8) gewonnen, die gewichteten Helligkeiten (13, 14) sowie der Kontrast (15) von Objekt (7) und Hintergrund (8) bestimmt und Angaben über die Position des Objekts (7) im Videobild ermittelt, die bestimmten Werte von Helligkeit und Kontrast in Steuersignale für die Gain/Offset-Verstellvorrichtung umgesetzt und an die Videokamera (1) abgegeben und die Positionsangaben in Steuersignale für die Manipuliervorrichtung (2) umgesetzt und an diese weitergegeben werden, dadurch gekennzeichnet, dass der gewichtete Mittelwert der Helligkeit (13) des Objekts (7) durch Veränderung des Offset-Parameters der Videokamera (1) auf einen festen, vorgegebenen Wert (10) eingestellt und der Kontrast (15) zwischen den gewichteten Helligkeiten (13) des Objekts (7) und (14) des Hintergrunds (8) durch Veränderung des Gain-Parameters der Videokamera (1) festgelegt werden sowie der Gain-Parameter der Videokamera (1) derart festgelegt wird, dass die Helligkeitsverteilungen (11, 12) von Objekt (7) und Hintergrund (8) sich bei minimalem Kontrast (15) der gewichteten Helligkeiten (13, 14) minimal überlappen.

2. Verfahren nach Anspruch 1, dadurch gekennzeichnet, dass bei zu kleinem Kontrast (15) zwischen den gewichteten Helligkeiten (13, 14) von Objekt (7) und Hintergrund (8) der Gain-Parameter der Videokamera (1) so festgelegt wird, dass die Helligkeitsverteilungen (11, 12) von Objekt (7) und Hintergrund (8) einen möglichst grossen Kontrast (15) aufweisen, ohne aber in Bildhelligkeits-Sättigung überzugehen.

3. Vorrichtung zur Durchführung des Verfahrens nach Anspruch 1, mit einer auf ein Objekt (7) gerichteten Videokamera (1), die zur automatischen Steuerung von Helligkeit und Kontrast des Videobildes eine Gain/Offset-Verstellvorrichtung aufweist, mit einer steuerbaren Manipuliervorrichtung (2) und einer Bildsteuereinheit (3), welche mit der Videokamera (1) und einem Rechner (4) sowie dieser über ein Servosystem (51, 52) mit der Manipuliervorrichtung (2) verbunden sind, wobei aus einer Grauwert-Histogrammanalyse des Videobildes die Helligkeitsverteilungen (11, 12) des Objekts (7) und des dieses umgebenden Hintergrundes (8) gewonnen, die gewichteten Helligkeiten (13, 14) sowie der Kontrast (15) von Objekt (7) und Hintergrund (8) bestimmt und Angaben über die Position des Objekts (7) im Videobild ermittelt, die bestimmten Werte von Helligkeit und Kontrast in Steuersignale für die Gain/Offset-Verstellvorrichtung umgesetzt und an die Videokamera (1) abgegeben und die Positionsangaben in Steuersignale für die Manipuliervorrichtung (2) umgesetzt und an diese weitergegeben werden, dadurch gekennzeichnet, dass mit der Bildsteuereinheit (3) der gewichtete Mittelwert der Helligkeit (13) des Objekts (7) bestimmt und durch Veränderung des Offset-Parameters der Videokamera (1) auf einen festen, vorgegebenen Wert (10) eingestellt wird, dass mit der Bildsteuereinheit (3) der Kontrast (15) zwischen den gewichteten Helligkeiten (13) des Objekts (7) und (14) des Hintergrunds (8) bestimmt und durch Veränderung des Gain-Parameters der Videokamera (1) festgelegt wird und dass in der Bildsteuereinheit (3) der Gain-Parameter der Videokamera (1) derart festgelegt wird, dass die Helligkeitsverteilungen (11, 12) von Objekt (7) und Hintergrund (8) sich bei minimalem Kontrast (15) der gewichteten Helligkeiten (13, 14) minimal überlappen.

4. Vorrichtung nach Anspruch 3, dadurch gekennzeichnet, dass die steuerbare Manipuliervorrichtung (2) ein Industrieroboter (21) und das Objekt (7) ein Werkstück (71) oder Werkzeug (72) sind.

5. Vorrichtung nach Anspruch 3, dadurch gekennzeichnet, dass die steuerbare Manipuliervorrichtung (2) eine bewegliche Plattform (22), die Bildsteuereinheit (3) ein Video-Tracker (31) und das Objekt (7) ein Ziel (73) sind.

6. Vorrichtung nach einem der Ansprüche 3 bis 5, dadurch gekennzeichnet, dass die Videokamera (1) eine FLIR-Kamera (forward looking infrared camera) ist.

7. Anwendung des Verfahrens nach Anspruch 1 oder 2 zur automatischen Steuerung der Helligkeit und des Kontrastes eines Videobildes in einer Videokamera (1), die mit einem Industrieroboter (21) in Verbindung steht und ein Werkstück (71) oder Werkzeug (72) optisch aufnimmt.

8. Anwendung des Verfahrens nach Anspruch 1 oder 2 zur automatischen Steuerung der Helligkeit und des Kontrastes eines Videobildes in einer Videokamera (1), die mit einer beweglichen Plattform (22) in Verbindung steht und ein Ziel (73) optisch aufnimmt.

## Claims

1. Process of automatic control of brightness and contrast of a video image in a video camera (1), which is provided with a gain/offset adjusting device and directed towards an object (7) and which is used for controlling a manipulating device (2), in which respect brightness distributions (11, 12) of the object (7) and its surrounding background (8) are obtained from a grey-shade histogram analysis of the video image, and the brightness densities (13, 14) as well as the contrast (15) between object (7) and background (8) are determined and statements relative to the position of the object (7) in the video image are determined, determined values of brightness and contrast are converted into control signals for the gain/offset adjusting device and fed to the video camera (1), and the position statements are converted into control signals for, and fed to the manipulating device (2) , **characterised in that** the mean value of brightness density (13) of the object (7) is set by changing the offset parameter of the video camera (1) to a fixed specified value (10), and the contrast (15) between the brightness densities (13) of the object (7) and (14) of the background are set by changing the gain parameter of the video camera (1), and the gain parameter of the video camera (1) is set in such a manner that the brightness distributions (11, 12) of object (7) and background (8) overlap at minimum with minimum contrast (15) of the brightness densities (13, 14).

2. Process according to claim 1, **characterised in that** in the event of too little contrast (15) between the brightness densities (13, 14) of object 7) and background (8) the gain parameter of the video camera (1) is set so that the brightness distributions (11, 12) of object (7) and background (8) are of great possible contrast (15) without saturation of image brightness.

3. Device for carrying out the process of claim 1, comprising a video camera (1), which is directed towards an object (7) and which comprises a gain/offset adjusting device for automatic control of brightness and contrast of the video image, a controllable manipulating device (2) and an image control unit (3) which is connected to a video camera (1) and a computer (4), and the latter is connected via a servo system (51, 52) to the manipulating device (2), in which respect brightness distributions (11, 12) of the object (7) and its surrounding background (8) are obtained from a grey shade histogram analysis of the video image, the brightness densities (13, 14) and the contrast (15) of object (7) and background (8) are determined and statements of position of the object (7) in the video image are made, the determined values of brightness and contrast are converted into control signals for the gain/offset adjusting device and fed to the video camera (1), and the position statements are converted into control signals for the manipulating device (2) are fed to the latter, **characterised in that** the mean value of brightness density (13) of the object (7) is determined by means of the image control unit (3) and set to a specified value (10) by changing the offset parameter of the video camera (1), that the contrast (15) between the brightness densities (13) of the object (7) and (14) of the background (8) are determined by the image control unit (3) and set by changing the gain parameter of the video camera (1), and that the gain parameter of the video camera (1) is set in the image control unit (3) in such a manner that the brightness distributions (11, 12) of object (7) and background (8) overlap at minimum with minimum contrast (15) of the brightness densities (13, 14).

4. Device according to claim 3, **characterised in that** the controllable manipulating device (2) is an industrial robot (21), and the object (7) is a workpiece (71) or a tool (72).

5. Device according to claim 3, **characterised in that** the controllable manipulating device (2) is a movable platform (22), the image control unit (3) is a video tracker (31), and the object (7) is a target (73).

6. Device according to one of claims 3 to 5, **characterised in that** the video camera (1) is a FLIR camera (forward looking infrared camera).

7. Application of the process according to claim 1 or 2 for automatic control of brightness and contract of a video image in a video camera (1), which is connected to an industrial robot (21) and optically picks up a workpiece (71) or a tool (72).

8. Application of the process according to claim 1 or 2 for automatic control of brightness and contrast of a video image in a video camera (1), which is connected to a movable platform (22) and optically picks up a target (73).

## Revendications

1. Procédé de commande automatique de la luminance du contraste d'une image vidéo dans un dispositif de réglage de décalage de gain pour une caméra vidéo (1) dirigée sur un objet (7) utilisée pour la commande d'un dispositif de manipulation (2), une analyse de l'histogramme des gris de l'image vidéo donnant la distribution des luminances (11, 12) de l'objet (7) et du fond (8) entourant l'objet, les luminances pondérées (13, 14) ainsi que le contraste (15) étant définis par l'objet (7) et le fond (8) et donnent des indications concernant la position de l'objet (7) dans l'image vidéo, ce dispositif transformant les valeurs déterminées de la luminance et du contraste dans les signaux de commande du dispositif de réglage de décalage de gain pour les fournir à la caméra vidéo (1) et transformer les indications de position en des signaux de commande pour le dispositif de manipulation (2) pour les transmettre à celui-ci, caractérisé en ce que la valeur moyenne pondérée de luminance (13) de l'objet (7) est réglée par changement du paramètre offset de la caméra vidéo (1) en une valeur fixe prédéterminée (10) et le contraste (15) entre la luminance pondérée (13) de l'objet (7) et la luminance (14) du fond (8) sont fixés par changement des paramètres du gain de la caméra vidéo (1) et le paramètre de gain de la caméra vidéo (1) est fixé pour que la distribution de luminance (11, 12) de l'objet (7) et du fond (8) se chevauche au minimum pour un contraste minimum (15) des luminances pondérées (13, 14).

2. Procédé selon la revendication 1, caractérisé en ce que pour un contraste trop faible (15) entre les luminances pondérées (13, 14) de l'objet (7) et du fond (8), on fixe le paramètre de gain de la caméra vidéo (1) pour que les distributions de luminances (11, 12) de l'objet (7) et du fond (8) présentent un contraste aussi grand que possible, mais sans que la luminance de l'image ne se sature.

3. Dispositif pour la mise en oeuvre du procédé selon la revendication 1 avec une caméra vidéo (1) dirigée sur un objet (7) et qui comporte un dispositif de réglage de décalage de gain pour la commande automatique de la luminance et du contraste de l'image vidéo, avec un dispositif de manipulation commandé (2) et une unité de commande d'image (3) qui sont reliés à la caméra vidéo (1) et à un calculateur (4) et celui-ci est relié par un système d'asservissement (51, 52) au dispositif de manipulation (2), une analyse de l'histogramme des valeurs de gris de l'image vidéo donnant les distributions de luminance (11, 12) de l'objet (7) et du fond (8) qui l'entourent, déterminant les luminances pondérées (13, 14) et le contraste (15) entre l'objet (7) et le fond (8) et donnant des informations sur la position de l'objet (7) dans l'image vidéo, transformant les valeurs déterminées de la luminance et du contraste en des signaux de commande du dispositif de réglage de décalage de gain en les fournissant à la caméra vidéo (1) et transformant les indications de position en des signaux de commande pour le dispositif de manipulation (2) pour les transmettre à celui-ci, dispositif caractérisé en ce que l'unité de commande d'image (3) détermine la valeur moyenne pondérée de la luminance (13) de l'objet (7) et par modification du paramètre de décalage de la caméra vidéo (1) règle cette valeur à une valeur fixe prédéterminée (10), l'unité de commande d'image (3) déterminant le contraste (15) entre la luminance pondérée (13) de l'objet (7) et celle (14) du fond (8) et en le fixant par changement du paramètre de gain de la caméra vidéo (1), et en ce que l'unité de commande d'image (3) fixe le paramètre de gain de la caméra vidéo (1) pour que les distributions de luminances (11, 12) de l'objet (7) et du fond (8) se chevauchent au minimum pour un contraste minimum (15) des luminances pondérées (13, 14).

4. Dispositif selon la revendication 3, caractérisé en ce que le dispositif de manipulation commandé (2) est un robot industriel (21) et l'objet (7) est une pièce (71) ou un outil (72).

5. Dispositif selon la revendication 3, caractérisé en ce que le dispositif de manipulation commandé (2) est une plate-forme mobile (22), l'unité de commande d'image (3) est un dispositif de poursuite vidéo (31) et l'objet (7) est une cible (73).

6. Dispositif selon l'une des revendications 3 à 5, caractérisé en ce que la caméra vidéo (1) est une caméra FLIR (caméra infrarouge sensible au rayonnement infrarouge).

7. Application du procédé selon la revendication 1 ou 2, pour la commande automatique de la luminance et du contraste d'une image vidéo dans une caméra vidéo (1) coopérant avec un robot industriel (21) et recevant optiquement une pièce (71) ou un outil (72).

8. Application du procédé selon la revendication 1 ou 2, pour la commande automatique de la luminance et du contraste d'une image vidéo dans une caméra vidéo (1) qui est en liaison avec une plate-forme mobile (22) et reçoit optiquement une cible (73).
